# EUROPEAN PATENT APPLICATION

(11) **EP 2 059 055 A2**
(43) Date of publication of application: **13.05.2009**
(21) Application number: 08253654.1
(22) Date of filing: 07.11.2008
(51) Int. Cl.: H04N 9/31

(54) **Image display apparatus and image display method**

(30) Priority: 09.11.2007 JP 2007291605
(71) Applicant: Seiko Epson Corporation, Tokyo 163-0811 (JP)
(72) Inventor: Aragaki, Takumi c/o Seiko Epson Corporation, Suwa-shi Nagano-ken 392-8502 (JP); Hasegawa, Hiroshi c/o Seiko Epson Corporation, Suwa-shi Nagano-ken 392-8502 (JP)
(74) Representative: Cloughley, Peter Andrew

(57) **Abstract**

An image display apparatus that displays an image on the basis of image signals of sub-pixels of first, second, and third color components forming a pixel includes a first light modulating unit that modulates light of the first color component on the basis of the image signal of the sub-pixel of the first color component, a second light modulating unit that modulates light of the second color component on the basis of the image signal of the sub-pixel of the second color component, and a third light modulating unit that modulates light of the third color component on the basis of the image signal of the sub-pixel of the third color component. The first to third light modulating units are provided such that display sub-pixels corresponding to the sub-pixels that use the lights modulated by the first to third light modulating units shift in a first direction that is a horizontal direction or a vertical direction of the image.

## Description

The present invention relates to an image display apparatus and an image display method.

In recent years, high-performance image display apparatuses such as a large screen television and a projector are widespread. In these image display apparatuses, improvement of an image quality of a display image is becoming more important. For such improvement of an image quality of the image display apparatuses, it is necessary to improve a sense of resolution for a person who looks at the display image.

JP-A-6-214250 discloses a technique for improving brightness and resolution of a screen by combining two projectors to combine display screens formed by the projectors. More specifically, JP-A-6-214250 discloses a technique for shifting sub-pixels of two images by half a pixel and superimposing the images to form one image.

JP-A-2003-322908 discloses a projector in which sub-pixels of R are provided in addition to sub-pixels of the three primary colors of R, G, and B and the sub-pixels of R are shifted by half a pixel in the horizontal direction and the vertical direction with respect to the sub-pixels of R among the sub-pixels of R, G, and B.

However, in the technique disclosed in JP-A-6-214250, cost increases because the two projectors are used.

In the technique disclosed in JP-A-2003-322908, it is necessary to prepare four liquid crystal display devices and cost increases because a so-called 4CCD system is adopted.

An advantage of some aspects of the invention is to provide an image display apparatus and an image display method that can improve, at low cost, a sense of resolution for a person who looks at a display image.

According to an aspect of the invention, there is provided an image display apparatus that displays an image on the basis of image signals of sub-pixels of first, second, and third color components forming a pixel, the image display apparatus including a first light modulating unit that modulates light of the first color component on the basis of the image signal of the sub-pixel of the first color component, a second light modulating unit that modulates light of the second color component on the basis of the image signal of the sub-pixel of the second color component, and a third light modulating unit that modulates light of the third color component on the basis of the image signal of the sub-pixel of the third color component, wherein the first to third light modulating units are provided such that display sub-pixels corresponding to the sub-pixels that use the lights modulated by the first to third light modulating units shift in a first direction that is the horizontal direction or the vertical direction of the image.

According to the aspect of the invention, the number of pixels of at least three light modulating units is not limited to the number of pixels of one light modulating unit and spatial resolution can be improved. Therefore, it is possible to improve, at low cost, a sense of resolution for a person who looks at a display image.

In the image display apparatus according to the aspect of the invention, the first to third light modulating units may be provided such that, when first and second pixels are adjacent to each other in the first direction of the image, a display sub-pixel corresponding to a sub-pixel of the second or third color component forming the first pixel overlaps a boundary of display sub-pixels corresponding to sub-pixels of the first color component forming the first and second pixels.

According to the aspect of the invention, there is an effect that it is possible to inconspicuously display a so-called black matrix portion (a light-shielded portion).

In the image display apparatus according to the aspect of the invention, the first to third light modulating units may be provided such that display sub-pixels corresponding to sub-pixels of the first to third color components forming one pixel shift from one another in the first direction by one third of a distance between sub-pixels of the same color component adjacent to each other.

According to the aspect of the invention, areas of the display sub-pixels in portions obtained by the overlap of the display sub-pixels can be equalized. Therefore, it is possible to further improve the sense of resolution and, moreover, represent a more uniform image.

In the image display apparatus according to the aspect of the invention, when the display sub-pixels corresponding to the sub-pixels of the first to third color components forming one pixel are arranged in the first direction in order of the display sub-pixel corresponding to the sub-pixel of the first color component, the display sub-pixel corresponding to the sub-pixel of the second color component, and the display sub-pixel corresponding to the sub-pixel of the third color component, the second color component may be a G component.

According to the aspect of the invention, when the sub-pixels forming one pixel are shifted in the first direction and displayed, it is possible to suppress occurrence of a false color by shifting display sub-pixels corresponding to sub-pixels of an R component and a B component relatively to a display sub-pixel corresponding to a sub-pixel of the G component. For example, since the G component is more easily sensed than the R component and the B component, the G component is conspicuous when white or black is displayed at an end of a display image. On the other hand, it is possible to surely suppress occurrence of a false color by shifting the display sub-pixels corresponding to the sub-pixels of the R component and the B component relatively to the display sub-pixel corresponding to the sub-pixel of the G component.

In the image display apparatus according to the aspect of the invention, the first and second light modulating units may be provided such that the display sub-pixel corresponding to the sub-pixel of the second color component overlaps a lattice point of a square lattice formed by the centers of display sub-pixels corresponding to sub-pixels of the first color component.

According to the aspect of the invention, the number of pixels of at least three light modulating units is not limited to the number of pixels of one light modulating unit and spatial resolution can be improved. Therefore, it is possible to improve at low cost, a sense of resolution for a person who looks at a display image.

In the image display apparatus according to the aspect of the invention, the first and the second light modulating units may be provided such that, with respect to the display sub-pixel corresponding to the sub-pixel of the first color component, the display sub-pixel corresponding to the sub-pixel of the second color component shifts in the horizontal direction of the image by a half of a distance between the sub-pixels of the same color component adjacent to each other and the display sub-pixel corresponding to the sub-pixel of the second color component shifts in the vertical direction of the image by a half of the sub-pixels of the same color components adjacent to each other.

According to the aspect of the invention, areas of the display sub-pixels in portions obtained by the overlap of the display sub-pixels can be equalized. Therefore, it is possible to further improve the sense of resolution and, moreover, represent a more uniform image.

In the image display apparatus according to the aspect of the invention, the second color component may be a G component.

According to the aspect of the invention, since the G component has highest luminance, it is possible to make a joint between the other color components less easily seen by shifting positions of display sub-pixels of the other color components. Therefore, it is possible to improve uniformity of an image (in particular, a solid image) and reduce granularity as one index of image quality evaluation.

According to a second aspect of the invention, there is provided an image display method of displaying an image on the basis of image signals of sub-pixels of first to third color components, the image display method including modulating light of the first color component on the basis of the image signal of the sub-pixel of the first color component, modulating light of the second color component on the basis of the image signal of the sub-pixel of the second color component, and modulating light of the third color component on the basis of the image signal of the sub-pixel of the third color component, wherein display sub-pixels corresponding to the sub-pixels that use the lights modulated in the modulating are displayed to shift in a first direction that is the horizontal direction or the vertical direction of the image.

According to the aspects of the invention, the number of pixels of at least three light modulating units is not limited to the number of pixels of one light modulating unit and spatial resolution can be improved. Therefore, it is possible to improve at low cost, a sense of resolution for a person who looks at a display image.

The invention will be described by way of example only with reference to the accompanying drawings, wherein like numbers reference like elements.

Fig. 1 is an image display system to which an image display apparatus according to a first embodiment of the invention is applied.

Fig. 2 is a diagram for explaining sub-pixels according to the first embodiment.

Fig. 3 is a diagram of a configuration example of the image display apparatus according to the first embodiment.

Fig. 4A is a diagram for explaining a display sub-pixel arrangement corresponding to sub-pixels of a projector in the past.

Fig. 4B is a diagram for explaining a display sub-pixel arrangement corresponding to sub-pixels of a projector according to the first embodiment.

Fig. 5 is a detailed diagram for explaining the display sub-pixel arrangement corresponding to the sub-pixels shown in Fig. 4B.

Fig. 6 is a block diagram of a configuration example of an image display system including the image display apparatus according to the first embodiment.

Figs. 7A and 7B are diagrams for explaining a first example of sampling processing according to the first embodiment.

Figs. 8A and 8B are diagrams for explaining a second example of the sampling processing according to the first embodiment.

Figs. 9A and 9B are diagrams for explaining a third example of the sampling processing according to the first embodiment.

Figs. 10A and 10B are diagrams for explaining a fourth example of the sampling processing according to the first embodiment.

Figs. 11A and 11B are diagrams for explaining a display sub-pixel arrangement corresponding to sub-pixels of a projector according to a modification of the first embodiment.

Fig. 12 is a detailed diagram for explaining the display sub-pixel arrangement corresponding to the sub-pixels shown in Fig. 11B.

Fig. 13A is a diagram for explaining a display sub-pixel arrangement corresponding to sub-pixels of a projector in the past.

Fig. 13B is a diagram for explaining a display sub-pixel arrangement corresponding to sub-pixels according to a second embodiment of the invention.

Fig. 14 is a detailed diagram for explaining the display sub-pixel arrangement corresponding to the sub-pixels shown in Fig. 13B.

Figs. 15A and 15B are diagrams for explaining an effect of the second embodiment.

Fig. 16 is a diagram of an evaluation formula for granularity in Figs. 15A and 15B.

Embodiments of the invention are explained in detail below with reference to the accompanying drawings. The embodiments explained below do not unreasonably limit content of the invention described in claims. All configurations explained below are not always essential elements of the invention.

A projector is explained below as an example of an image display apparatus according to the embodiments of the invention. However, the image display apparatus according to the embodiments is not limited to the projector.

### First Embodiment

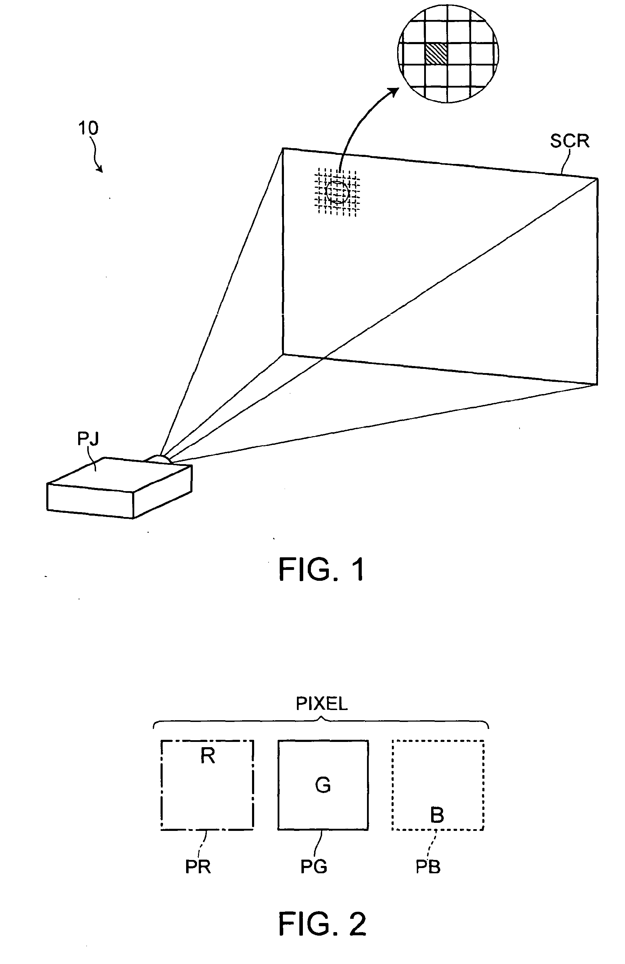

Fig. 1 is a diagram for explaining an image display system to which an image display apparatus according to a first embodiment of the invention is applied.

An image display system 10 to which the image display apparatus according to the first embodiment is applied includes a projector PJ and a screen SCR. The projector PJ projects an image on the screen SCR and displays the image. The projected image on the screen SCR is formed by plural pixels (display pixels). Each of the pixels is formed by sub-pixels of plural color components. The projector PJ modulates lights of the color components on the basis of an image signal generated for each of the color components and projects the lights on the screen SC.

The projector PJ functions as the image display apparatus. The projector PJ modulates light from a light source in sub-pixel units and projects the light after the modulation to display an image.

Fig. 2 is a diagram for explaining sub-pixels according to the first embodiment.

In the first embodiment, one pixel is formed by three sub-pixels. More specifically, one pixel is formed by a sub-pixel PR of an R component, a sub-pixel PG of a G component, and a sub-pixel PB of a B component. Display pixels of an image projected on the screen SCR include a display sub-pixel corresponding to the sub-pixel of the R component, a display sub-pixei corresponding to the sub-pixel of the G component, and a display sub-pixel corresponding to the sub-pixel of the B component.

In Fig. 2, in order to clearly show a relation between the pixel and the sub-pixels forming the pixel, the sub-pixels are schematically shown as being arranged in the horizontal direction. In the first embodiment of the invention, a sense of resolution for a person who looks at a display image is improved at low cost by contriving an arrangement of display sub-pixels corresponding to plural sub-pixels forming one pixel.

Display sub-pixels corresponding to sub-pixels of the R component, display sub-pixels corresponding to sub-pixels of the G component, and display sub-pixels corresponding to sub-pixels of the B component formed by the projector in the past are arranged such that two-dimensional pixel arrangements thereof coincide with one another. Therefore, the number of pixels of a display image is small considering the number of pixels necessary during optical modulation performed in sub-pixel units. In particular, a sense of resolution of an image edge portion present in the display image is not enough. Therefore, in the first embodiment, an image is projected on the screen SCR such that display sub-pixels corresponding to plural sub-pixels forming one pixel shift from one another in the first direction that is the horizontal or the vertical direction of the projected image on the screen SCR. Consequently, a sense of resolution of the display image is more improved than ever and the display sub-pixels of the respective color components are displayed in a partially overlapping state. Therefore, in particular, there is an effect of further improving a sense of resolution of the image edge portion present in the display image.

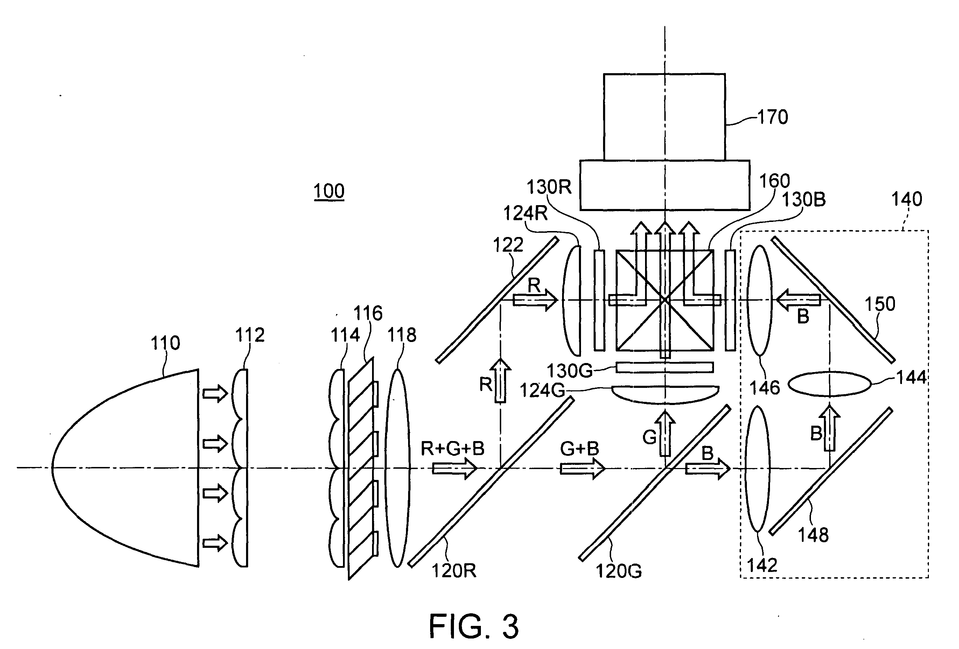

Fig. 3 is a configuration example of the image display apparatus according to the first embodiment. In the configuration example shown in Fig. 3, the image display apparatus according to the first embodiment is applied to a so-called 3CCD projector shown in Fig. 1. However, the invention is not limited to the image display apparatus applied to the projector.

A projector as an image display apparatus 100 according to the first embodiment includes a light source 110, integrator lenses 112 and 114, a polarization converting element 116, a superimposing lens 118, a dichroic mirror for R 120R, a dichroic mirror for G 120G, a reflection mirror 122, a field lens for R 124R, a field lens for G 124G, a liquid crystal panel for R 130R (a first light modulating unit), a liquid crystal panel for G 130G (a second modulating unit), a liquid crystal panel for B 130B (a third modulating unit), a relay optical system 140, a cross dichroic prism 160, and a projection lens 170. Liquid crystal panels used as the liquid crystal panel for R 130R, the liquid crystal panel for G 130G, and the liquid crystal panel for B 130B are transmissive liquid crystal display devices. The relay optical system 140 includes relay lenses 142, 144, and 146 and reflection mirrors 148 and 150.

The light source 110 includes, for example, an ultrahigh pressure mercury lamp and emits light including at least light of an R component, light of a G component, and light of a B component. The integrator lens 112 has plural small lenses for dividing the light from the light source 110 into plural partial lights. The integrator lens 114 has plural small lenses corresponding to the plural small lenses of the integrator lens 112. The superimposing lens 118 superimposes the partial lights emitted from the plural small lenses of the integrator lens 112.

The polarization converting element 116 has a polarizing beam splitter and a λ/2 plate. The polarization converting element 116 transmits a p polarized light, reflects an s polarized light, and converts the p polarized light into the s polarized light. The s polarized light from the polarization converting element 116 is irradiated on the superimposing lens 118.

The light superimposed by the superimposing lens 118 is made incident on the dichroic mirror for R 120R. The dichroic mirror for R 120R has a function of reflecting the light of the R component and transmitting the lights of the G component and the B component. The lights transmitted through the dichroic mirror for R 120R are irradiated on the dichroic mirror for G 120G. The light reflected by the dichroic mirror for R 120R is reflected by the reflection mirror 122 and guided to the field lens for R 124R.

The dichroic mirror for G 120G has a function of reflecting the light of the G component and transmitting the light of the B component. The light transmitted through the dichroic mirror for G 120G is made incident on the relay optical system 140. The light reflected by the dichroic mirror for G 120G is guided to the field lens for G 124G.

In order to reduce a difference between the optical path length of the light of the B component transmitted through the dichroic mirror for G 120G and the optical path length of the lights of the R component and the G component as much as possible, the relay optical system 140 corrects the difference between the optical path lengths using the relay lenses 142, 144, and 146. The light transmitted through the relay lens 142 is guided to the relay lens 144 by the reflection mirror 148. The light transmitted through the relay lens 144 is guided to the relay lens 146 by the reflection mirror 150. The light transmitted through the relay lens 146 is irradiated on the liquid crystal panel for B 130B.

The light irradiated on the field lens for R 124R is converted into parallel rays and made incident on the liquid crystal panel for R 130R. The liquid crystal panel for R 130R functions as a light modulating element (a light modulating unit) such that transmittance (passing rate or percentage modulation) changes on the basis of an image signal for R (an image signal of a sub-pixel of a first color component). Therefore, the light (light of the first color component) made incident on the liquid crystal panel for R 130R is modulated on the basis of the image signal for R. The light after the modulation is made incident on the cross dichroic prism 160.

The light irradiated on the field lens for G 124G is converted into parallel rays and made incident on the liquid crystal panel for G 130G. The liquid crystal panel for G 130G functions as a light modulating element (a light modulating unit) such that transmittance (passing rate or percentage modulation) changes on the basis of an image signal for G (an image signal of a sub-pixel of a second color component). Therefore, the light (light of the second color component) made incident on the liquid crystal panel for G 130G is modulated on the basis of the image signal for G. The light after the modulation is made incident on the cross dichroic prism 160.

The liquid crystal panel for B 130B on which the lights converted into parallel rays by the relay lenses 142, 144, and 146 are irradiated functions as a light modulating element (a light modulating unit) such that transmittance (passing rate or percentage modulation) changes on the basis of an image signal for B (an image signal of a sub-pixel of a third color component). Therefore, the light (light of the third color component) made incident on the liquid crystal panel for B 130B is modulated on the basis of the image signal for B. The light after the modulation is made incident on the cross dichroic prism 160.

The cross dichroic prism 160 has a function of outputting, as emission light, combined light obtained by combining the incident lights from the liquid crystal panel for R 130R, the liquid crystal panel for G 130G, and the liquid crystal panel for B 130B. The projection lens 170 is a lens for expanding and focusing an output image on the screen SCR.

As described above, in the projector as the image display apparatus 100 shown in Fig. 3, when the liquid crystal panel for R 130R, the liquid crystal panel for G 130G, and the liquid crystal panel for B 130B are represented as first to third light modulating units, the first light modulating unit modulates the light of the first color component on the basis of the image signal of the sub-pixel of the first color component, the second light modulating unit modulates the light of the second color component on the basis of the image signal of the sub-pixel of the second color component, and the third light modulating unit modulates the light of the third color component on the basis of the image signal of the sub-pixel of the third color component. In the first embodiment, the first to third light modulating units are provided such that pixels that use the lights modulated by the first to third light modulating units shift from one another in the first direction that is the horizontal or the vertical direction of a projected image (a display image) on the screen SCR of the projector.

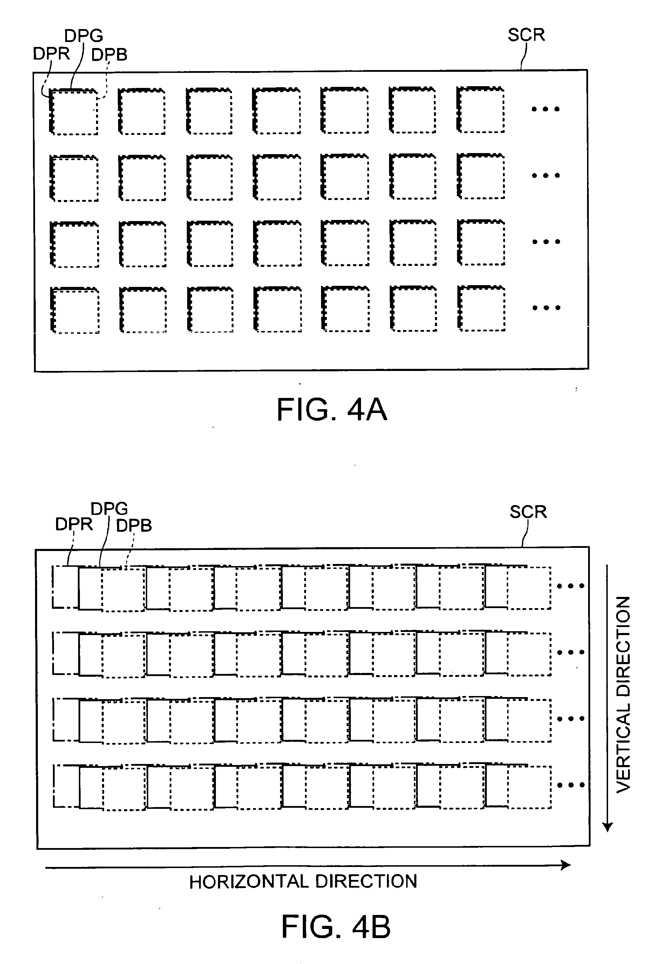

Fig. 4A is a diagram for explaining a display sub-pixel arrangement corresponding to sub-pixels of a projector in the past. Fig. 4B is a diagram for explaining a display sub-pixel arrangement corresponding to sub-pixels of the projector as the image display apparatus 100 according to the first embodiment. In Fig. 4B, the first direction is shown as the horizontal direction of the display image on the screen SCR.

When one pixel is formed by a sub-pixel of the R component, a sub-pixel of the G component, and the sub-pixel of the B component, as shown in Fig. 4A, display sub-pixels corresponding to sub-pixels in the projector in the past are arranged such that a display sub-pixel DPR corresponding to the sub-pixel of the R component, a display sub-pixel DPG corresponding to the sub-pixel of the G component, and a display sub-pixel DPB corresponding to the sub-pixel of the B component coincide with one another. In Fig. 4A, to facilitate understanding of the figure, the display sub-pixel DPR corresponding to the sub-pixel of the R component, the display sub-pixel DPG corresponding to the sub-pixel of the G component, and the display sub-pixel DPB corresponding to the sub-pixel of the B component are shown as being slightly shifted from one another in the horizontal direction and the vertical direction of the image. However, actually, the display sub-pixel DPR corresponding to the sub-pixel of the R component, the display sub-pixel DPG corresponding to the sub-pixel of the G component, and the display sub-pixel DPB corresponding to the sub-pixel of the B component coincide with one another.

Therefore, in the projector in the past, for example, in the case of a so-called 3CCD system, although the liquid crystal panel is used as a light valve for each of the color components to perform light modulation in pixel units, only resolution for the liquid crystal panel for one color component is obtained. The resolution of the display image cannot be improved and, moreover, in particular, a sense of resolution of an image edge portion present in the display image is not enough.

On the other hand, in the first embodiment, as shown in Fig. 4B, the display sub-pixel DPR corresponding to the sub-pixel of the R component, the display sub-pixel DPG corresponding to the sub-pixel of the G component, and the display sub-pixel DPB corresponding to the sub-pixel of the B component are arranged to shift from one another in the horizontal direction of a display image. This can be realized by, in Fig. 3, adjusting positions of the liquid crystal panel for R 130R, the liquid crystal panel for G 130G, and the liquid crystal panel for B 130B relative to one another and with respect to the cross dichroic prism 160. In Fig. 4B, to facilitate understanding of the figure, the display sub-pixel DPR corresponding to the sub-pixel of the R component, the display sub-pixel DPG corresponding to the sub-pixel of the G component, and the display sub-pixel DPB corresponding to the sub-pixel of the B component are shown as being slightly shifted from one another in the vertical direction of the image. However, for example, it is possible to cause the display sub-pixel DPR corresponding to the sub-pixel of the R component, the display sub-pixel DPG corresponding to the sub-pixel of the G component, and the display sub-pixel DPB corresponding to the sub-pixel of the B component to coincide with one another in the vertical direction.

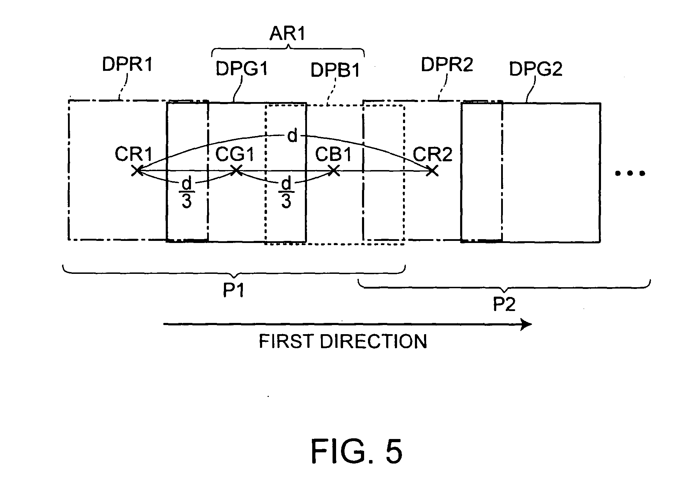

Fig. 5 is a detailed diagram for explaining the display sub-pixel arrangement corresponding to the sub-pixels shown in Fig. 4B. In Fig. 5, as in Fig. 4B, to facilitate understanding of the figure, a display sub-pixel corresponding to the sub-pixel of the R component, a display sub-pixel corresponding to the sub-pixel of the G component, and a display sub-pixel corresponding to the sub-pixel of the B component are shown as being slightly shifted from one another in the vertical direction of the image. However, for example, it is possible to cause the display sub-pixel corresponding to the sub-pixel of the R component, the display sub-pixel corresponding to the sub-pixel of the G component, and the display sub-pixel corresponding to the sub-pixel of the B component to coincide with one another in the vertical direction.

In Fig. 5, it is assumed that a display sub-pixel DPR1 corresponding to a sub-pixel of the R component, a display sub-pixel DPG1 corresponding to a sub-pixel of the G component, and a display sub-pixel DPB1 corresponding to a sub-pixel of the B component forming a first pixel P1 are shifted in the first direction.

First and second pixels P1 and P2 are adjacent to each other in, for example, the first direction that is the horizontal direction of a display image. In this case, in Fig. 3, the liquid crystal panel for R 130R, the liquid crystal panel for G 130G, and the liquid crystal panel for B 130B are provided as first to third modulating units with respect to the cross dichroic prism 160 such that the display sub-pixel DPG1 corresponding to the sub-pixel of the G component (in a broader sense, the second color component) forming the first pixel P1 or the display sub-pixel DPB1 corresponding to the sub-pixel of the B component (in a broader sense, the third color component) forming the first pixel P1 overlap a boundary AR1 between the display sub-pixel DPR1 corresponding to the sub-pixel of the R component (in a broader sense, the first color component) forming the first pixel P1 and the display sub-pixel DPR2 corresponding to the sub-pixel of the R component forming the second pixel P2.

Consequently, when the liquid crystal panel for R 130R, the liquid crystal panel for G 130G, and the liquid crystal panel for B 130B have the same resolution, whereas only resolution for one liquid crystal panel is obtained in the past, according to the first embodiment, there is an effect that the resolution of the display image is further improved at low cost. In other words, it is possible to improve spatial resolution by shifting the display sub-pixels DPR1, DPG1, and DPB1 corresponding to the sub-pixels forming the first pixel P1. It is known that, although a false color may occur in an overlap portion obtained by shifting the display sub-pixels DPR1, DPG1, and DPB1 corresponding to the sub-pixels forming the first pixel P1, a sense of resolution can be improved by the display image.

Further, there is an effect that it is possible to inconspicuously display a black matrix portion (a light-shielded portion) and, moreover, it is easy to improve resolution in the vertical direction.

In the first embodiment described above, more specifically, it is desirable that, in Fig. 3, the liquid crystal panel for R 130R, the liquid crystal panel for G 130G, and the liquid crystal panel for B 130B are provided as the first to third modulating units with respect to the cross dichroic prism 160 such that the display sub-pixels DPR1, DPG1, and DPB1 corresponding to the sub-pixels of the R component, the G component, and the B component (the first to third color components) forming one pixel shift from one another in the first direction by one third of a pixel. More specifically, it is desirable that the liquid crystal panel for R 130R, the liquid crystal panel for G 130G, and the liquid crystal panel for B 130B are provided as the first to third modulating units with respect to the cross dichroic prism 160 such that the display-sub pixels corresponding to the sub-pixels of the first to third color components forming one pixel shift from one another in the first direction by one third of a distance between sub-pixels of the same color component adjacent to each other.

In Fig. 5, a distance in the horizontal direction between centers CR1 and CR2 of display sub-pixels corresponding to sub-pixels of the same color component (in Fig. 5, for example, the R component) of pixels (in Fig. 5, the first pixel P1 and the second pixel P2) adjacent to each other in the horizontal direction of the display image as the first direction is represented as "d". Then, a distance between the center CR1 of the display sub-pixel DPR1 corresponding to the sub-pixel of the R component forming the first pixel P1 and the center CG1 of the display sub-pixel DPG1 corresponding to the sub-pixel of the G component forming the first pixel P1 is d/3. Similarly, a distance between the center CG1 of the display sub-pixel DPG1 corresponding to the sub-pixel of the G component forming the first pixel P1 and the center CB1 of the display sub-pixel DPB1 corresponding to the sub-pixel of the B component forming the first pixel P1 is d/3.

Consequently, areas of the display sub-pixels in portions obtained by the overlap of the display sub-pixels can be equalized. Therefore, it is possible to further improve a sense of resolution and, moreover, represent a more uniform image.

In the above description, a distance between the sub-pixels of the same color component adjacent to each other is set as a unit and the display sub-pixels shift from one another by one third of the unit. However, in the invention, a unit of a shift amount of the display sub-pixels corresponding to the sub-pixels is not limited to the distance between the sub-pixels of the same color component adjacent to each other. For example, a size of the display sub-pixels corresponding to the sub-pixels may be set as the unit or a distance determined in advance may be set as the unit.

Moreover, in the first embodiment, it is desirable that, as shown in Fig. 5, when the display sub-pixels corresponding to the sub-pixels forming the first pixel P1 are arranged in order in the first direction, the display sub-pixels DPR1, DPG1, and DPB1 corresponding to the sub-pixels are arranged in order in the first direction. In other words, it is desirable that, when the display sub-pixels corresponding to the sub-pixels of the first to third color components forming one pixel are arranged in order in the first direction, the second color component is the G component.

As described above, when the sub-pixels forming the pixel are displayed to be shifted in the first direction, it is possible to suppress occurrence of a false color by shifting the display sub-pixels corresponding to the sub-pixels of the R component and the B component relatively to the display sub-pixel corresponding to the sub-pixel of the G component. For example, since the G component is more easily sensed than the R component and the B component, the G component is conspicuous when white or black is displayed at an end of a display image. On the other hand, it is possible to surely suppress occurrence of a false color by shifting the display sub-pixels corresponding to the sub-pixels of the R component and the B component relatively to the display sub-pixel corresponding to the sub-pixel of the G component.

Furthermore, in the first embodiment, since the display sub-pixels corresponding to the sub-pixels are shifted, it is possible to further improve a sense of resolution by generating image signals of the sub-pixels with sampling processing described below. The sampling processing is performed in, for example, an image processing apparatus that supplies the image signals to the projector as the image display apparatus.

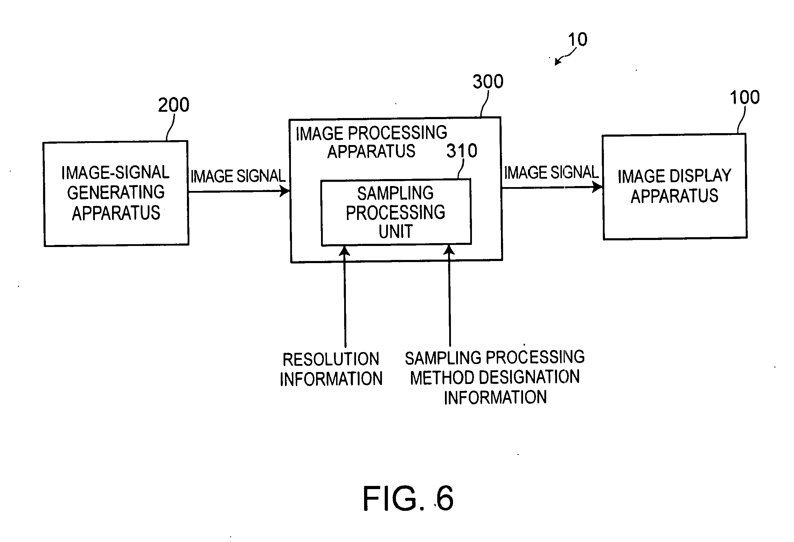

Fig. 6 is a block diagram of a configuration example of an image display system including the image display apparatus according to the first embodiment. In Fig. 6, components same as those shown in Figs. 1 and 3 are denoted by the same reference numerals and explanation of the components is omitted as appropriate.

An image display system 10 according to the first embodiment includes an image-signal generating apparatus 200, an image processing apparatus 300, and the image display apparatus 100. The projector having the configuration shown in Fig. 3 can be adopted as the image display apparatus 100. The image-signal generating apparatus 200 generates an image signal corresponding to an image (content) displayed on the image display apparatus 100 and outputs the image signal to the image processing apparatus 300. The image processing apparatus 300 includes a sampling processing unit 310. The image processing apparatus 300 receives the image signal from the image-signal generating apparatus 200, performs sampling processing corresponding to the resolution of an image represented by the image signal, and supplies the image signal after the sampling processing to the image display apparatus 100.

Resolution information corresponding to the resolution of the image represented by the image signal from the image-signal generating apparatus 200 and the resolution of the image display apparatus 100 is given to the sampling processing unit 310. Further, sampling processing method designation information for designating a sampling processing method for the image signal outputted to the image display apparatus 100 is given to the sampling processing unit 310. The resolution information and the sampling processing method designation information are given from, for example, the image-signal generating apparatus 200 or the image display apparatus 100.

For example, when the resolution of the image represented by the image signal from the image-signal generating apparatus 200 and the resolution of the image displayed on the image display apparatus 100 coincide with each other, "1" is given as the resolution information. For example, when the resolution of the image displayed on the image display apparatus 100 is one third of the resolution of the image represented by the image signal from the image-signal generating apparatus 200, "3" is given as the resolution information.

Examples of the sampling processing designation information given to the sampling processing unit 310 include information designating interpolation processing such as a nearest neighbor method, a bi-linear method, and a bi-cubic method.

The sampling processing unit 310 generates, with the processing method designated by the sampling processing method designation information, the image signal from the image-signal generating apparatus 200 to realize the resolution designated by the resolution information and outputs the image signal after the processing to the image display apparatus 100.

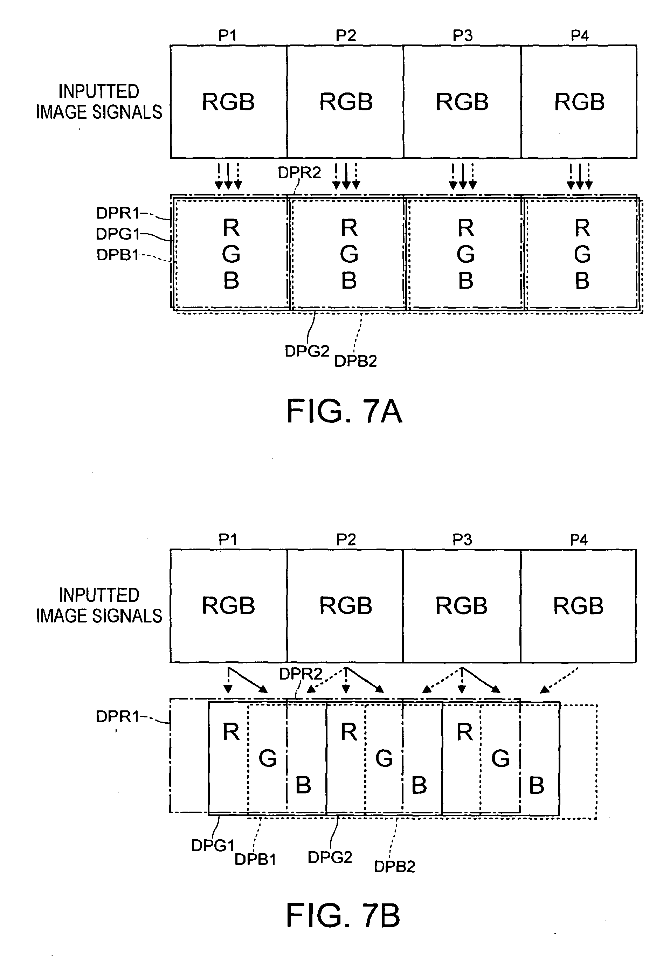

Figs. 7A and 7B are diagrams for explaining a first example of the sampling processing according to the first embodiment.

In Figs. 7A and 7B, to facilitate understanding of the figure, display sub-pixels corresponding to sub-pixels of the R component, display sub-pixels corresponding to sub-pixels of the G component, and display sub-pixels corresponding to sub-pixels of the B component are shown as being slightly shifted from one another in the vertical direction of an image. However, for example, it is possible to cause the display sub-pixels corresponding to the sub-pixels of the R component, the display sub-pixels corresponding to the sub-pixels of the G component, and the display sub-pixels corresponding to the sub-pixels of the B component to coincide with one another in the vertical direction.

In Fig. 7A, image signals in the case of the display sub-pixel arrangement corresponding to the sub-pixels of the image display apparatus in the past are schematically shown. In Fig. 7A, the resolution of the image signal from the image-signal generating apparatus 200 and the resolution of the image signal outputted to the image display apparatus 100 coincide with each other. In Fig. 7B, image signals interpolated by the nearest neighbor method in the case of the display pixel arrangement corresponding to the sub-pixels of the image display apparatus 100 according to the first embodiment are schematically shown. In Fig. 7B, the resolution of the image signal from the image-signal generating apparatus 200 and the resolution of the image signal outputted to the image display apparatus 100 coincide with each other.

In the case of the sub-pixel arrangement in the past, as shown in Fig. 7A, sub-pixels forming one pixel are optically modulated for each of the color components by directly using image signals of the sub-pixels and display sub-pixels corresponding to the sub-pixels are displayed to coincide with one another. For example, as shown in Fig. 7A, a display sub-pixel DPR1 corresponding to a sub-pixel of the R component forming a first pixel P1, a display sub-pixel DPG1 corresponding to a sub-pixel of the G component forming the first pixel P1, and a display sub-pixel DPB1 corresponding to a sub-pixel of the B component forming the first pixel P1 are displayed to coincide with one another by using an image signal corresponding to a first pixel P1.

On the other hand, in the case of the sub-pixel arrangement according to the first embodiment, positions of display sub-pixels corresponding to sub-pixels shift with respect to positions of pixels of an image represented by inputted image signals. Therefore, in the first embodiment, a display sub-pixel corresponding to each of sub-pixels is displayed by the nearest neighbor method as shown in Fig. 7B by using an image signal of a relevant color component nearest to the sub-pixels. For example, as shown in Fig. 7B, a display sub-pixel DPR1 corresponding to a sub-pixel of the R component is displayed by using an image signal of the R component among image signals corresponding to a first pixel P1. A display sub-pixel DPG1 corresponding to a sub-pixel of the G component is displayed by using an image signal of the G component among the image signals corresponding to the first pixel P1. A display sub-pixel DPB1 corresponding to a sub-pixel of the B component is displayed by using an image signal of the B component among image signals corresponding to a second pixel P2. Moreover, a display sub-pixel DPR2 corresponding to a sub-pixel of the R component is displayed by using an image signal of the R component among the image signals corresponding to the second pixel P2. A display sub-pixel DPG 2 corresponding to a sub-pixel of the G component is displayed by using an image signal of the G component among the image signals corresponding to the second pixel P2. A display sub-pixel DPB2 corresponding to a sub-pixel of the B component is displayed by using an image signal of the B component among image signals corresponding to a third pixel P3.

In this way, the display sub-pixels corresponding to the sub-pixels are displayed by using, according to center positions of the sub-pixels in the display image, the image signals interpolated by the nearest neighbor method with respect to the image signals of the original image. This makes it possible to further improve an image quality.

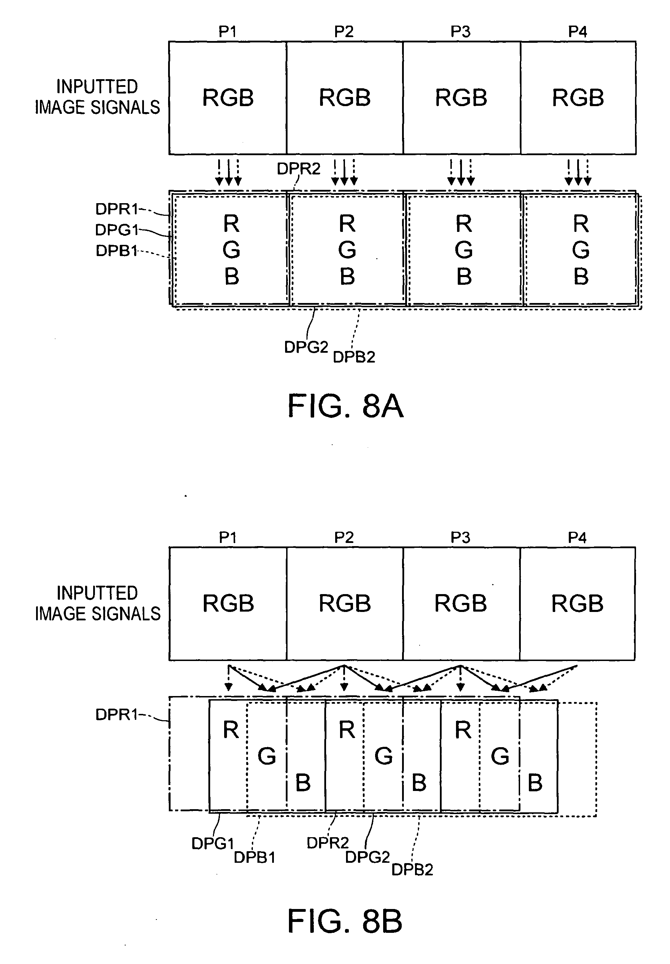

Figs. 8A and 8B are diagrams for explaining a second example of the sampling processing according to the first embodiment.

In Figs. 8A and 8B, to facilitate understanding of the figure, display sub-pixels corresponding to sub-pixels of the R component, display sub-pixels corresponding to sub-pixels of the G component, and display sub-pixels corresponding to sub-pixels of the B component are shown as being slightly shifted from one another in the vertical direction of an image. However, for example, it is possible to cause the display sub-pixels corresponding to the sub-pixels of the R component, the display sub-pixels corresponding to the sub-pixels of the G component, and the display sub-pixels corresponding to the sub-pixels of the B component to coincide with one another in the vertical direction.

In Fig. 8A, image signals in the case of the display sub-pixel arrangement corresponding to the sub-pixels of the image display apparatus in the past are schematically shown. In Fig. 8A, the resolution of the image signal from the image-signal generating apparatus 200 and the resolution of the image signal outputted to the image display apparatus 100 coincide with each other. In Fig. 8B, image signals interpolated by the bi-linear method in the case of the display pixel arrangement corresponding to the sub-pixels of the image display apparatus 100 according to the first embodiment are schematically shown. In Fig. 8B, the resolution of the image signal from the image-signal generating apparatus 200 and the resolution of the image signal outputted to the image display apparatus 100 coincide with each other.

In the case of the sub-pixel arrangement in the past, as shown in Fig. 8A, sub-pixels forming one pixel are optically modulated for each of the color components by directly using image signals of the sub-pixels and display sub-pixels corresponding to the sub-pixels are displayed to coincide with one another. For example, as shown in Fig. 8A, a display sub-pixel DPR1 corresponding to a sub-pixel of the R component forming a first pixel P1, a display sub-pixel DPG1 corresponding to a sub-pixel of the G component forming the first pixel P1, and a display sub-pixel DPB1 corresponding to a sub-pixel of the B component forming the first pixel P1 are displayed to coincide with one another by using an image signal corresponding to a first pixel P1.

On the other hand, in the second example of the sampling processing, as shown in Fig. 8B, display sub-pixels corresponding to the sub-pixels are displayed by using a signal obtained by interpolating two image signals of a relevant color component with the bi-linear method. For example, as shown in Fig. 8B, a display sub-pixel DPR1 corresponding to a sub-pixel of the R component is displayed by using an image signal of the R component among image signals corresponding to the first pixel P1. A display sub-pixel DPG1 corresponding to a sub-pixel of the G component is displayed by using a signal obtained by interpolating an image signal of the G component among image signals corresponding to first and second pixels P1 and P2 with the bi-linear method. A display sub-pixel DPB1 corresponding to a sub-pixel of the B component is displayed by using a signal obtained by interpolating an image signal of the B component among the image signals corresponding to the first and second pixels P1 and P2 with the bi-linear method. Moreover, a display sub-pixel DPR2 corresponding to a sub-pixel of the R component is displayed by using a signal obtained by interpolating an image signal of the R component among image signals corresponding to second and third pixels P2 and P3 with the bi-linear method. A display sub-pixel DPG2 corresponding to a sub-pixel of the G component is displayed by using a signal obtained by interpolating an image signal of the G component among the image signals corresponding to the second and third pixels P2 and P3 with the bi-linear method. A display sub-pixel DPB2 corresponding to a sub-pixel of the B component is displayed by using a signal obtained by interpolating an image signal of the B component amount the image signals corresponding to the second and third pixels P2 and P3 with the bi-linear method.

In this way, the display sub-pixels corresponding to the sub-pixels are displayed by using, according to center positions of the sub-pixels in the display image, the image signals interpolated by the bi-linear method with respect to the image signals of the original image. This makes it possible to further improve an image quality.

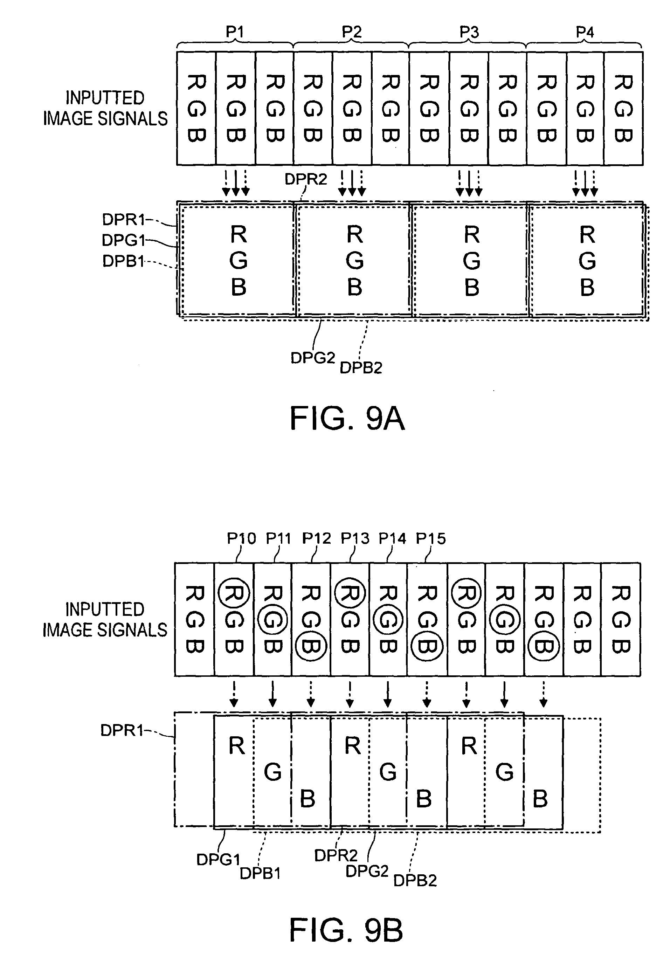

Figs. 9A and 9B are diagrams for explaining a third example of the sampling processing according to the first embodiment.

In Figs. 9A and 9B, to facilitate understanding of the figure, display sub-pixels corresponding to sub-pixels of the R component, display sub-pixels corresponding to sub-pixels of the G component, and display sub-pixels corresponding to sub-pixels of the B component are shown as being slightly shifted from one another in the vertical direction of an image. However, for example, it is possible to cause the display sub-pixels corresponding to the sub-pixels of the R component, the display sub-pixels corresponding to the sub-pixels of the G component, and the display sub-pixels corresponding to the sub-pixels of the B component to coincide with one another in the vertical direction.

In Fig. 9A, image signals in the case of the display sub-pixel arrangement corresponding to the sub-pixels of the image display apparatus in the past are schematically shown. In Fig. 9A, the resolution of the image signal from the image-signal generating apparatus 200 is three times as high as the resolution of the image signal outputted to the image display apparatus 100. In Fig. 9B, image signals interpolated by the nearest neighbor method in the case of the display pixel arrangement corresponding to the sub-pixels of the image display apparatus 100 according to the first embodiment are schematically shown. In Fig. 9B, the resolution of the image signal from the image-signal generating apparatus 200 is three times as high as the resolution of the image signal outputted to the image display apparatus 100.

In the case of the sub-pixel arrangement in the past, as shown in Fig. 9A, sub-pixels forming a nearest pixel among three pixels are optically modulated for each of the color components by directly using image signals of the sub-pixels and display sub-pixels corresponding to the sub-pixels are displayed to coincide with one another. For example, as shown in Fig. 9A, a display sub-pixel DPR1 corresponding to a sub-pixel of the R component, a display sub-pixel DPG1 corresponding to a sub-pixel of the G component, and a display sub-pixel DPB1 corresponding to a sub-pixel of the B component are displayed to coincide with one another by using an image signal for one pixel out of three pixels for a first pixel P1.

On the other hand, in the third example of the sampling processing, a display sub-pixel corresponding to each of sub-pixels is displayed by the nearest neighbor method as shown in Fig. 9B by using an image signal of a relevant color component of a nearest pixel among three pixels. For example, as shown in Fig. 9B, a display sub-pixel DPR1 corresponding to a sub-pixel of the R component is displayed by using an image signal of the R component of a pixel P10 to which a center position of the sub-pixel is the nearest. A display sub-pixel DPG1 corresponding to a sub-pixel of the G component is displayed by using an image signal of the G component of a pixel P11 to which a center position of the sub-pixel is the nearest. A display sub-pixel DPB1 corresponding to a sub-pixel of the B component is displayed by using an image signal of the B component of a pixel P12 to which a center position of the sub-pixel is the nearest. Similarly, a display sub-pixel DPR2 corresponding to a sub-pixel of the R component is displayed by using an image signal of the R component of a pixel P13 to which a center position of the sub-pixel is the nearest. A display sub-pixel DPG 2 corresponding to a sub-pixel of the G component is displayed by using an image signal of the G component of a pixel P14 to which a center position of the sub-pixel is the nearest. A display sub-pixel DPB2 corresponding to a sub-pixel of the B component is displayed by using an image signal of the B component of a pixel P15 to which a center position of the sub-pixel is the nearest.

In this way, the display sub-pixels corresponding to the sub-pixels are displayed by using, according to center positions of the sub-pixels in the display image, the image signals interpolated by the nearest neighbor method with respect to the image signals of the original image. This makes it possible to further improve an image quality.

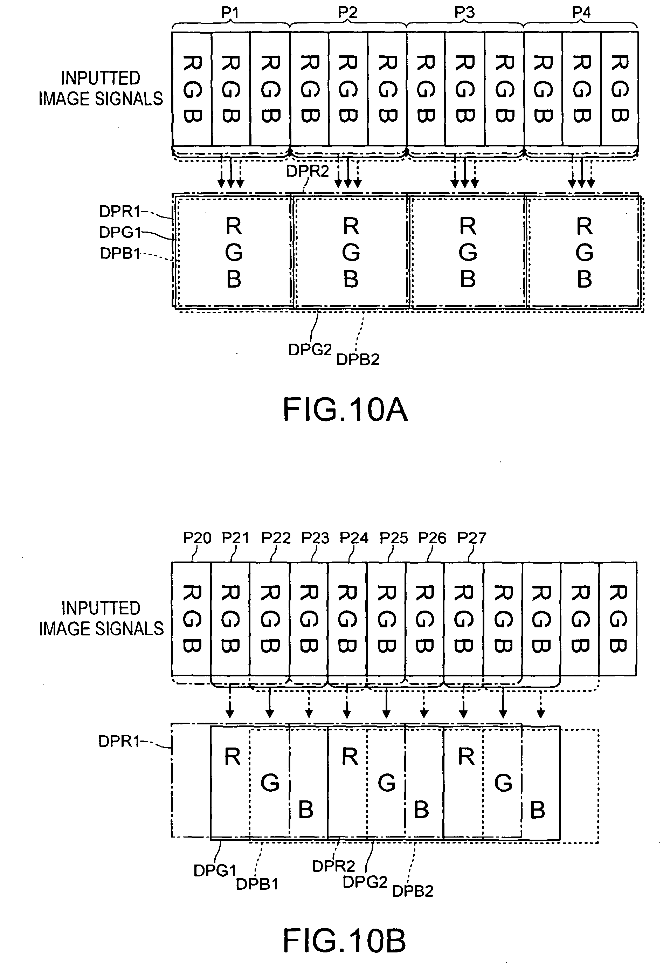

Figs. 10A and 10B are diagrams for explaining a fourth example of the sampling processing according to the first embodiment.

In Figs. 10A and 10B, to facilitate understanding of the figure, display sub-pixels corresponding to sub-pixels of the R component, display sub-pixels corresponding to sub-pixels of the G component, and display sub-pixels corresponding to sub-pixels of the B component are shown as being slightly shifted from one another in the vertical direction of an image. However, for example, it is possible to cause the display sub-pixels corresponding to the sub-pixels of the R component, the display sub-pixels corresponding to the sub-pixels of the G component, and the display sub-pixels corresponding to the sub-pixels of the B component to coincide with one another in the vertical direction.

In Fig. 10A, image signals in the case of the display sub-pixel arrangement corresponding to the sub-pixels of the image display apparatus in the past are schematically shown when the resolution of the image signal from the image-signal generating apparatus 200 is three times as high as the resolution of the image signal outputted to the image display apparatus 100. In Fig. 10B, image signals interpolated by the bi-linear method in the case of the display pixel arrangement corresponding to the sub-pixels of the image display apparatus 100 according to the first embodiment are schematically shown when the resolution of the image signal from the image-signal generating apparatus 200 is three times as high as the resolution of the image signal outputted to the image display apparatus 100.

In the case of the sub-pixel arrangement in the past, as shown in Fig. 10A, sub-pixels of relevant color components for three pixels are optically modulated for each of the color components by using a signal obtained by interpolating image signals of the sub-pixels with the bi-linear method and display sub-pixels corresponding to the sub-pixels are displayed to coincide with one another. For example, as shown in Fig. 10A, a display sub-pixel DPR1 corresponding to a sub-pixel of the R component, a display sub-pixel DPG1 corresponding to a sub-pixel of the G component, and a display sub-pixel DPB1 corresponding to a sub-pixel of the B component are displayed to coincide with one another by using image signals for the color components for the three pixels for the first pixel P1.

On the other hand, in the fourth example of the sampling processing, as shown in Fig. 10B, display sub-pixels corresponding to the sub-pixels are displayed by using image signals for three pixels for each of the color components with the bi-linear method. For example, as shown in Fig. 10B, a display sub-pixel DPR1 corresponding to a sub-pixel of the R component is displayed by using an image signal obtained by interpolating image signals of the R component of three pixels P20, P21, and P22 having near center pixels with the bi-linear method. A display sub-pixel DPG1 corresponding to a sub-pixel of the G component is displayed by using an image signal obtained by interpolating image signals of the G component of three pixels P21, P22, and P23 having near center pixels with the bi-linear method. A display sub-pixel DPB1 corresponding to a sub-pixel of the B component is displayed by using an image signal obtained by interpolating image signals of the B component of three pixels P22, P23, and P24 having near center pixels with the bi-linear method. Similarly, a display sub-pixel DPR2 corresponding to a sub-pixel of the R component is displayed by using an image signal obtained by interpolating image signals of the R component of three pixels P23, P24, and P25 having near center pixels with the bi-linear method. A display sub-pixel DPG2 corresponding to a sub-pixel of the G component is displayed by using an image signal obtained by interpolating image signals of the G component of three pixels P24, P25, and P26 having near center pixels with the bi-linear method. A display sub-pixel DPB2 corresponding to a sub-pixel of the B component is displayed by using an image signal obtained by interpolating image signals of the B component of three pixels P25, P26, and P27 having near center pixels with the bi-linear method.

In this way, the display sub-pixels corresponding to the sub-pixels are displayed by using, according to center positions of the sub-pixels in the display image, the image signals interpolated by the bi-linear method with respect to the image signals of the original image. This makes it possible to further improve an image quality.

Fig. 5 to Figs. 10A and 10B are explained on the assumption that the first direction is the horizontal direction of the display image on the screen SCR in Fig. 4B. However, the invention is not limited to this.

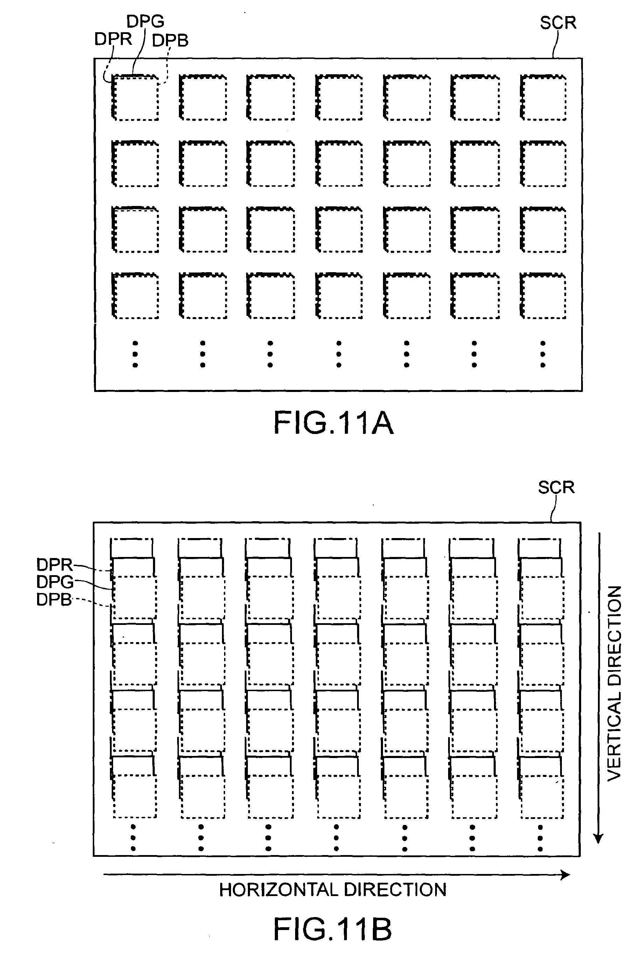

Figs. 11A and 11B are diagrams for explaining a display sub-pixel arrangement corresponding to sub-pixels of a projector according to a modification of the first embodiment. Fig. 11A is a diagram for explaining a display sub-pixel arrangement corresponding to sub-pixels of a projector in the past, the same as that shown in Fig. 4A. In Fig. 11B, it is assumed that a first direction is the vertical direction of a display image on the screen SCR. In Figs. 11A and 11B, components same as those shown in Figs. 4A and 4B are denoted by the same reference signs and explanation of the components is omitted as appropriate.

When one pixel is formed by a sub-pixel of the R component, a sub-pixel of the G component, and a sub-pixel of the B component, as shown in Fig. 11A, display sub-pixels corresponding to sub-pixels in the projector in the past are arranged such that a display sub-pixel DPR corresponding to the sub-pixel of the R component, a display sub-pixel DPG corresponding to the sub-pixel of the G component, and a display sub-pixel DPB corresponding to the sub-pixel of the B component coincide with one another. In Fig. 11A, to facilitate understanding of the figure, the display sub-pixel DPR corresponding to the sub-pixel of the R component, the display sub-pixel DPG corresponding to the sub-pixel of the G component, and the display sub-pixel DPB corresponding to the sub-pixel of the B component are shown as being slightly shifted from one another in the horizontal direction and the vertical direction of the image. However, actually, the display sub-pixel DPR corresponding to the sub-pixel of the R component, the display sub-pixel DPG corresponding to the sub-pixel of the G component, and the display sub-pixel DPB corresponding to the sub-pixel of the B component coincide with one another.

On the other hand, in the modification of the first embodiment, as shown in Fig. 11B, the display sub-pixel DPR corresponding to the sub-pixel of the R component, the display sub-pixel DPG corresponding to the sub-pixel of the G component, and the display sub-pixel DPB corresponding to the sub-pixel of the B component are arranged to shift from one another in the vertical direction of a display image. This can be realized by, in Fig. 3, adjusting positions of the liquid crystal panel for R 130R, the liquid crystal panel for G 130G, and the liquid crystal panel for B 130B relative to each other and with respect to the cross dichroic prism 160. In Fig. 11B, to facilitate understanding of the figure, the display sub-pixel DPR corresponding to the sub-pixel of the R component, the display sub-pixel DPG corresponding to the sub-pixel of the G component, and the display sub-pixel DPB corresponding to the sub-pixel of the B component are shown as being slightly shifted from one another in the horizontal direction of the image. However, for example, it is possible to cause the display sub-pixel DPR corresponding to the sub-pixel of the R component, the display sub-pixel DPG corresponding to the sub-pixel of the G component, and the display sub-pixel DPB corresponding to the sub-pixel of the B component to coincide with one another in the horizontal direction.

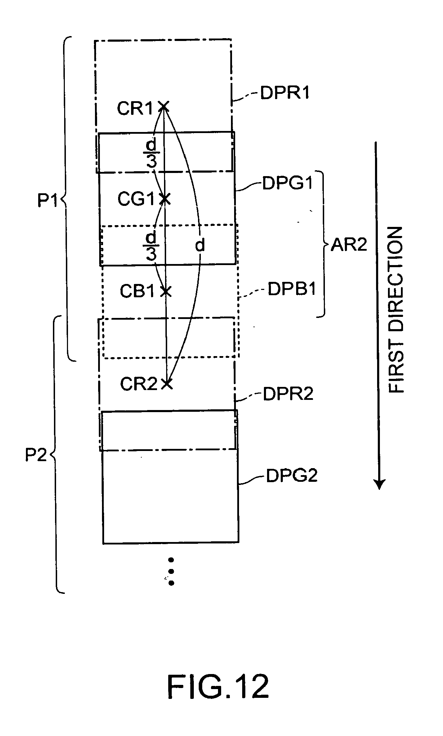

Fig. 12 is a detailed diagram for explaining the display sub-pixel arrangement corresponding to the sub-pixels shown in Fig. 11B. In Fig. 12, as in Fig. 11B, to facilitate understanding of the figure, a display sub-pixel corresponding to the sub-pixel of the R component, a display sub-pixel corresponding to the sub-pixel of the G component, and a display sub-pixel corresponding to the sub-pixel of the B component are shown as being slightly shifted from one another in the horizontal direction of the image. However, for example, it is possible to cause the display sub-pixel corresponding to the sub-pixel of the R component, the display sub-pixel corresponding to the sub-pixel of the G component, and the display sub-pixel corresponding to the sub-pixel of the B component to coincide with one another in the horizontal direction.

In Fig. 12, it is assumed that a display sub-pixel DPR1 corresponding to a sub-pixel of the R component, a display sub-pixel DPG1 corresponding to a sub-pixel of the G component, and a display sub-pixel DPB1 corresponding to a sub-pixel of the B component forming a first pixel P1 are shifted in the first direction.

First and second pixels P1 and P2 are adjacent to each other in, for example, the first direction that is the vertical direction of a display image. In this case, in Fig. 3, the liquid crystal panel for R 130R, the liquid crystal panel for G 130G, and the liquid crystal panel for B 130B are provided as first to third modulating units with respect to the cross dichroic prism 160 such that the display sub-pixel DPG1 corresponding to the sub-pixel of the G component (in a broader sense, the second color component) forming the first pixel P1 or the display sub-pixel DPB1 corresponding to the sub-pixel of the B component (in a broader sense, the third color component) forming the first pixel P1 overlap a boundary AR2 between the display sub-pixel DPR1 corresponding to the sub-pixel of the R component (in a broader sense, the first color component) forming the first pixel P1 and the display sub-pixel DPR2 corresponding to the sub-pixel of the R component forming the second pixel P2.

Consequently, when the liquid crystal panel for R 130R, the liquid crystal panel for G 130G, and the liquid crystal panel for B 130B have the same resolution, whereas only resolution for one liquid crystal panel is obtained in the past, according to the modification of the first embodiment, there is an effect that the resolution of the display image is further improved at low cost. In other words, it is possible to improve spatial resolution by shifting the display sub-pixels DPR1, DPG1, and DPB1 corresponding to the sub-pixels forming the first pixel P1. For example, it is known that, although a false color may occur in an overlap portion obtained by shifting the display sub-pixels DPR1, DPG1, and DPB1 corresponding to the sub-pixels forming the first pixel P1, a sense of resolution can be improved by the display image.

Further, there is an effect that it is possible to inconspicuously display a black matrix portion (a light-shielded portion) and, moreover, it is easy to improve resolution in the horizontal direction.

In the first embodiment described above, more specifically, it is desirable that, in Fig. 3, the liquid crystal panel for R 130R, the liquid crystal panel for G 130G, and the liquid crystal panel for B 130B are provided as the first to third modulating units with respect to the cross dichroic prism 160 such that the display sub-pixels DPR1, DPG1, and DPB1 corresponding to the sub-pixels of the R component, the G component, and the B component (the first to third color components) forming one pixel shift from one another by one third of a pixel in the first direction.

In Fig. 12, a distance in the vertical direction between centers CR1 and CR2 of display sub-pixels corresponding to sub-pixels of the same color component (in Fig. 12, for example, the R component) of pixels (in Fig. 12, the first pixel P1 and the second pixel P2) adjacent to each other in the vertical direction of the display image as the first direction is represented as "d". Then, a distance between the center CR1 of the display sub-pixel DPR1 corresponding to the sub-pixel of the R component forming the first pixel P1 and the center CG1 of the display sub-pixel DPG1 corresponding to the sub-pixel of the G component forming the first pixel P1 is d/3. Similarly, a distance between the center CG1 of the display sub-pixel DPG1 corresponding to the sub-pixel of the G component forming the first pixel P1 and the center CB1 of the display sub-pixel DPB1 corresponding to the sub-pixel of the B component forming the first pixel P1 is d/3.

Consequently, areas of the display sub-pixels in portions obtained by the overlap of the display sub-pixels can be equalized. Therefore, it is possible to further improve a sense of resolution and, moreover, represent a more uniform image.

Moreover, in the modification of the first embodiment, it is desirable that, as shown in Fig. 12, when the display sub-pixels corresponding to the sub-pixels forming the first pixel P1 are arranged in order in the first direction, the display sub-pixels DPR1, DPG1, and DPB1 corresponding to the sub-pixels are arranged in order in the first direction. In other words, it is desirable that, when the display sub-pixels corresponding to the sub-pixels of the first to third color components forming one pixel are arranged in order in the first direction, the second color component is the G component.

As described above, when the sub-pixels forming the pixel are displayed to be shifted in the first direction, it is possible to suppress occurrence of a false color by shifting the display sub-pixels corresponding to the sub-pixels of the R component and the B component relatively to the display sub-pixel corresponding to the sub-pixel of the G component. For example, since the G component is more easily sensed than the R component and the B component, the G component is conspicuous when white or black is displayed at an end of a display image. On the other hand, it is possible to surely suppress occurrence of a false color by shifting the display sub-pixels corresponding to the sub-pixels of the R component and the B component relatively to the display sub-pixel corresponding to the sub-pixel of the G component.

Even in the modification of the first embodiment, it is possible to further improve a sense of resolution by generating image signals of the sub-pixels with sampling processing as described above. Concerning the sampling processing in the modification of the first embodiment, detailed explanation is omitted because interpolation processing in the vertical direction only has to be performed instead of the interpolation processing in the horizontal direction according to the first embodiment.

### Second Embodiment

In the first embodiment, the display sub-pixels corresponding to the sub-pixels forming one pixel shift from one another. However, the invention is not limited to this.

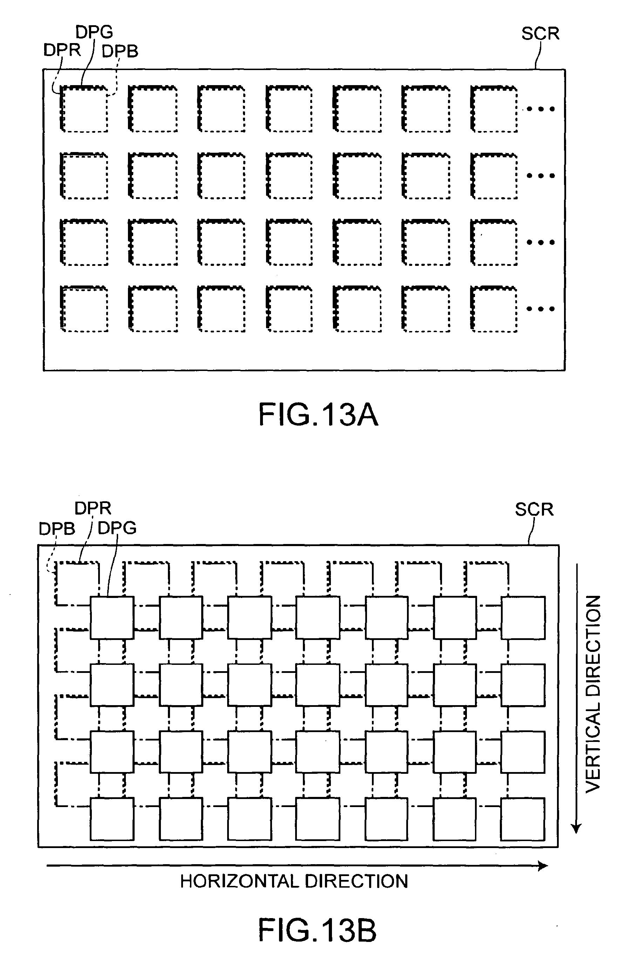

Fig. 13A is a diagram for explaining a display sub-pixel arrangement corresponding to sub-pixels of a projector in the past. Fig. 13B is a diagram for explaining a display sub-pixel arrangement corresponding to sub-pixels according to a second embodiment of the invention. In Fig. 13B, the first direction is shown as the horizontal direction of the display image on the screen SCR.

When one pixel is formed by a sub-pixel of the R component, a sub-pixel of the G component, and the sub-pixel of the B component, as shown in Fig. 13A, display sub-pixels corresponding to sub-pixels in the projector in the past are arranged such that a display sub-pixel DPR corresponding to the sub-pixel of the R component, a display sub-pixel DPG corresponding to the sub-pixel of the G component, and a display sub-pixel DPB corresponding to the sub-pixel of the B component coincide with one another. In Fig. 13A, to facilitate understanding of the figure, the display sub-pixel DPR corresponding to the sub-pixel of the R component, the display sub-pixel DPG corresponding to the sub-pixel of the G component, and the display sub-pixel DPB corresponding to the sub-pixel of the B component are shown as being slightly shifted from one another in the horizontal direction and the vertical direction of the image. However, actually, the display sub-pixel DPR corresponding to the sub-pixel of the R component, the display sub-pixel DPG corresponding to the sub-pixel of the G component, and the display sub-pixel DPB corresponding to the sub-pixel of the B component coincide with one another.

Therefore, in the projector in the past, for example, in the case of a so-called 3CCD system, although the liquid crystal panel is used as a light valve for each of the color components to perform light modulation in pixel units, only resolution for the liquid crystal panel for one color component is obtained. The resolution of the display image cannot be improved and, moreover, in particular, a sense of resolution of an image edge portion present in the display image is not enough. Further, since the display sub-pixels corresponding to the sub-pixels are displayed to coincide with each other, a user may feel roughness depending on a display image.

On the other hand, in the second embodiment, as shown in Fig. 13B, a display sub-pixel DPG corresponding to a sub-pixel of the G component (in a broader sense, a second color component) is arranged to shift in the horizontal direction and the vertical direction of a display image with respect to a display sub-pixel DPR corresponding to a sub-pixel of the R component (in a broader sense, a first color component). More specifically, a display sub-pixel corresponding to a sub-pixel of the G component (the second color component) is arranged to overlap a lattice point of a square lattice formed by the centers of display sub-pixels corresponding to sub-pixels of the R component (the first color component). This can be realized by, in Fig. 3, adjusting positions of the liquid crystal panel for R 130R and the liquid crystal panel for G 130G relative to one another and with respect to the cross dichroic prism 160.

In the second embodiment, a position of the display sub-pixel DPB corresponding to the sub-pixel of the B component is not limited to the position of the display sub-pixel DPB unless an image quality of the display image is deteriorated. In Fig. 13B, for the purpose of a cost reduction obtained by simplifying an adjustment process, the position of the display sub-pixel DPB corresponding to the sub-pixel of the B component is simply caused to coincide with a position of the display sub-pixel DPR corresponding the sub-pixel of the R component. In the second embodiment, it is desirable that the display sub-pixel DPB corresponding to the sub-pixel of the B component is arranged to overlap the display sub-pixel DPR corresponding to the sub-pixel of the R component and the display sub-pixel DPG corresponding to the sub-pixel of the G component.

In Fig. 13B, to facilitate understanding of the figure, the display sub-pixel DPR corresponding to the sub-pixel of the R component and the display sub-pixel DPB corresponding to the sub-pixel of the B component are shown as being slightly shifted from each other in the horizontal direction and the vertical direction of the image. However, actually, it is possible to cause the display sub-pixel DPR corresponding to the sub-pixel of the R component and the display sub-pixel DPB corresponding to the sub-pixel of the B component to coincide with each other.

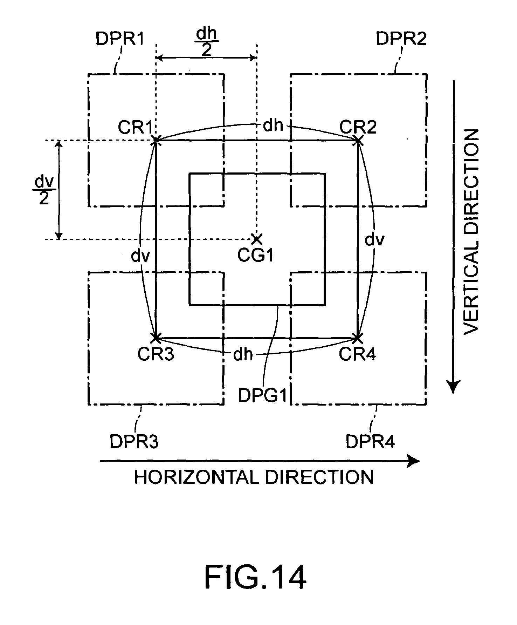

Fig. 14 is a detailed diagram for explaining the display sub-pixel arrangement corresponding to the sub-pixels shown in Fig. 13B. In Fig. 14, the display sub-pixels corresponding to the sub-pixels of the B component are not shown.

It is assumed that first and second pixels P1 and P2 are adjacent to each other and third and fourth images P3 and P4 are adjacent to each other in the horizontal direction of a display image and the first and third pixels P1 and P3 are adjacent to each other and the second and fourth pixels P2 and P4 are adjacent to each other in the vertical direction of the display image. In this case, a square lattice is formed by centers CR1 to CR4 of display sub-pixels DPR1 to DPR4 corresponding to sub-pixels of the R component (in a broader sense, the first color component) forming the first to fourth pixels P1 to P4. A display sub-pixel DPG1 corresponding to a sub-pixel of the G component (in a broader sense, the second color component) is arranged to overlap a lattice point of the square lattice. The display sub-pixel DPG1 corresponding to the sub-pixel of the G component is a display sub-pixel corresponding to the sub-pixel forming any one of the first to fourth pixels P1 to P4.

More specifically, in the second embodiment, the display sub-pixel DPG1 corresponding to the sub-pixei of the G component is arranged to shift by half a pixel in the horizontal direction of the display image and by half a pixel in the vertical direction of the display image with respect to the display sub-pixel DPR1 corresponding to the sub-pixel of the R component. Still more specifically, first and second light modulating units are provided such that display sub-pixels corresponding to sub-pixels of the second color component are shifted in the horizontal direction of an image by a half of a distance between sub-pixels of the same color component adjacent to each other and in the vertical direction of the image by a half of sub-pixels of the same color component adjacent to each other with respect to display sub-pixels corresponding to sub-pixels of the first color component.

Among the centers CR1 to CR4 of the display sub-pixels DPR1 to DPR4 corresponding to the four sub-pixels forming the square lattice, a distance between the centers CR1 and CR2 and a distance between the centers CR3 and CR4 are represented as dh and a distance between the centers CR1 and CR3 and a distance between the centers CR2 and CR4 are represented as dv. The display sub-pixel DPG1 corresponding to a sub-pixel of the G component in which the center CG1 is provided is arranged to shift by dh/2 in the horizontal direction and dv/2 in the vertical direction of the display image with respect to the display sub-pixel DPR1 corresponding to the sub-pixel of the R component.

Consequently, areas of the display sub-pixels in portions obtained by the overlap of the display sub-pixels can be equalized. Therefore, it is possible to further improve a sense of resolution and, moreover, represent a more uniform image.

In the above description, a distance between the sub-pixels of the same color component adjacent to each other is set as a unit and the display sub-pixels shift from one another by a half of the unit. However, in the invention, a unit of a shift amount of the display sub-pixels corresponding to the sub-pixels is not limited to the distance between the sub-pixels of the same color component adjacent to each other. For example, a size of the display sub-pixels corresponding to the sub-pixels may be set as a unit or a distance determined in advance may be set as a unit.

In Fig. 14, the distances between the centers of the sub-pixels are explained as being different in the horizontal direction and the vertical direction. However, the distance between the centers in the horizontal direction of the sub-pixels and the distance between the centers in the vertical direction of the sub-pixels may be equal.

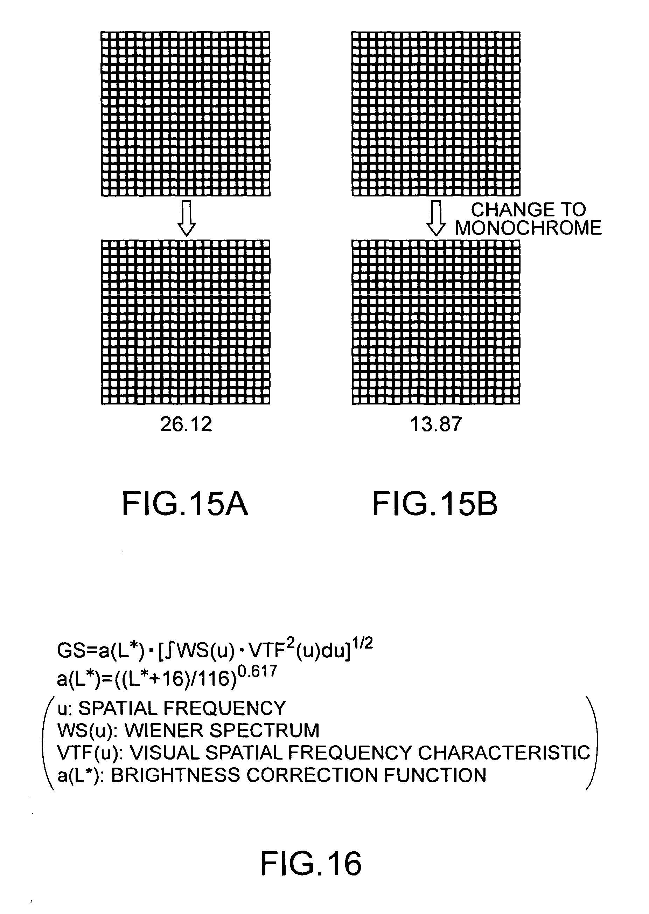

Figs. 15A and 15B are diagrams for explaining an effect of the second embodiment. Fig. 15A is a schematic diagram of granularity in the display sub-pixel arrangement corresponding to the sub-pixels in the past. Fig. 15B is a schematic diagram of granularity in the display sub-pixel arrangement corresponding the sub-pixels according to the second embodiment.

Fig. 16 is a diagram of an evaluation formula for granularity in Figs. 15A and 15B.

As a simulation result under conditions that a projection size is 75 inches, the number of pixels is 1920×1080, an aperture ratio is 42.25%, a visual distance is 0.5 m, and an image is a totally white pattern, the granularity is "26.12" in Fig. 15A and "13.87" in Fig. 15B. As a value of the granularity is smaller, graininess falls and a sense of roughness of an image can be reduced. In Fig. 15B, a result of simulation for changing an image to a monochrome using only luminance components is shown.

As described above, since the G component has highest luminance among the R component, the G component, and the B component, it is possible to make a joint between the R component and the B component less easily seen by shifting positions of display sub-pixels of the other R and B components. Therefore, it is possible to improve uniformity of an image (in particular, a solid image) and reduce granularity as one index of image quality evaluation.

The image display apparatus and the image display method according to the invention are explained above on the basis of the embodiments and the modifications thereof. However, the invention is not limited to the embodiments. It is possible to carry out the invention in various forms without departing from the scope of the invention. For example, modifications described below are also possible.

(1) In the explanation of the embodiments and the modifications thereof, one pixel includes sub-pixels of three color components. However, the invention is not limited to this. The number of color components forming one pixel may be two or four or more.

(2) In the explanation of the embodiments and the modifications thereof, the light valve is used as the light modulating unit. However, the invention is not limited to this. For example, DLP (Digital Light Processing) (registered trademark) or LCOS (Liquid Crystal On Silicon) may be adopted as the light modulating unit.

(3) In the explanation of the embodiments and the modifications thereof, the light valve employing a so-called 3CCD transmissive liquid crystal panel is explained as an example of the light modulating unit. However, a light valve employing a 4CCD transmissive liquid crystal panel or a transmissive liquid crystal panel including more than four plates may be adopted.

(4) In the explanation of the embodiments and the modifications thereof, the nearest neighbor method, the bi-linear method, and the bi-cubic method are described as examples of the sampling processing method. However, the invention is not limited to these interpolation processing methods. [0148](5) In the embodiments, the invention is explained as the image display apparatus and the image display method. However, the invention is not limited to this. For example, the invention may be a program in which a processing procedure of an image display method for realizing the invention is described or a recording medium in which the program is recorded.

## Claims

1. An image display apparatus (100) arranged to display an image on the basis of image signals of sub-pixels of first, second, and third color components forming a pixel, the image display apparatus comprising:
a first light modulating unit (130R) that modulates light of the first color component on the basis of the image signal of the sub-pixel of the first color component;
a second light modulating unit (130G) that modulates light of the second color component on the basis of the image signal of the sub-pixel of the second color component; and
a third light modulating unit (130B) that modulates light of the third color component on the basis of the image signal of the sub-pixel of the third color component, wherein
the first to third light modulating units are provided such that display sub-pixels corresponding to the sub-pixels that use the lights modulated by the first to third light modulating units shifted in a first direction.

2. The image display apparatus according to claim 1, wherein the first direction is a horizontal direction or a vertical direction of the image.

3. The image display apparatus according to claim 1 or claim 2, wherein the first to third light modulating units are provided such that, when first and second pixels are adjacent to each other in the first direction of the image, a display sub-pixel corresponding to a sub-pixel of the second or third color component forming the first pixel overlaps a boundary between display sub-pixels corresponding to sub-pixels of the first color component forming the first and second pixels.

4. The image display apparatus according to claim 1 or claim 2, wherein the first to third light modulating units are provided such that display sub-pixels corresponding to sub-pixels of the first to third color components forming one pixel shift from one another in the first direction by one third of a distance between sub-pixels of the same color component adjacent to each other.

5. The image display apparatus according to claim 1 or claim 2, wherein, when the display sub-pixels corresponding to the sub-pixels of the first to third color components forming one pixel are arranged in the first direction in order of the display sub-pixel corresponding to the sub-pixel of the first color component, the display sub-pixel corresponding to the sub-pixel of the second color component, and the display sub-pixel corresponding to the sub-pixel of the third color component, the second color component is a G component.

6. The image display apparatus according to any one of the preceding claims, wherein the first and second light modulating units are provided such that the display sub-pixel corresponding to the sub-pixel of the second color component overlaps a lattice point of a square lattice formed by centers of display sub-pixels corresponding to sub-pixels of the first color component.

7. The image display apparatus according to claim 6, wherein the first and the second light modulating units are provided such that, with respect to the display sub-pixel corresponding to the sub-pixel of the first color component, the display sub-pixel corresponding to the sub-pixel of the second color component shifts in the horizontal direction of the image by a half of a distance between the sub-pixels of the same color component adjacent to each other and the display sub-pixel corresponding to the sub-pixel of the second color component shifts in the vertical direction of the image by a half of the distance of the sub-pixels of the same color components adjacent to each other.

8. The image display apparatus according to claim 5, wherein the second color component is a G component.

9. An image display method of displaying an image on the basis of image signals of sub-pixels of first to third color components, the image display method comprising:
modulating light of the first color component on the basis of the image signal of the sub-pixel of the first color component;
modulating light of the second color component on the basis of the image signal of the sub-pixel of the second color component; and
modulating light of the third color component on the basis of the image signal of the sub-pixel of the third color component, wherein display sub-pixels corresponding to the sub-pixels that use the lights modulated in the modulating are shifted in a first direction.

10. The image display method of claim 9, wherein the first direction is a horizontal direction or a vertical direction of the image.
